# EUROPÄISCHE PATENTSCHRIFT

(11) **EP 0 354 477 B1**
(45) Veröffentlichungstag und Bekanntmachung des Hinweises auf die Patenterteilung: **21.07.1993**
(21) Anmeldenummer: 89114362.0
(22) Anmeldetag: 03.08.1989
(51) Int. Cl.: H04M 19/02

(54) **Verfahren und Anordnung zur Erzeugung von Impulsfolgen für eine Reihe von Signalleitungen**
Method and device for the generation of pulse sequences for a number of signal lines
Méthode et dispositif de génération de séquences d'impulsions pour une série de lignes de signalisation

(30) Priorität: 10.08.1988 DE 3827162
(43) Veröffentlichungstag der Anmeldung: 14.02.1990
(73) Patentinhaber: Siemens Nixdorf Informationssysteme Aktiengesellschaft, 33102 Paderborn (DE)
(72) Erfinder: Brandt, Ulrich, Dipl.-Ing., D-8000 München 80 (DE); Sprick, Erhard, Dipl.-Ing., D-8000 München 60 (DE)
(74) Vertreter: Fuchs, Franz-Josef, Dr.-Ing.

(56) Entgegenhaltungen:
- DE-C- 2 546 672
- US-A- 3 919 492

## Beschreibung

Die Erfindung betrifft ein Verfahren und eine Anordnung zur Erzeugung von Impulsfolgen für eine Reihe von Signalleitungen gemäß dem Oberbegriff des Patentanspruchs 1.

Vielfach werden Impuls folgen für Prüf- und Steuerzwecke benötigt, beispielsweise in der Ablaufsteuerung einer Datenverarbeitungsanlage unter Verwendung einer Vielzahl von Signalen. Eine Schaltungsanordnung zur Erzeugung beliebig zusammengesetzter Impulsfolgen beinhaltet die DE-A-1 803 902: Als bekannt werden darin Anordnungen beschrieben, die mit durch einen Impulsgeber fremdimpulsgesteuerten, zyklisch umlaufenden Zählketten arbeiten. Kontakte der einzelnen Kettenrelais schließen bzw. öffnen in Verbindung mit einem Diodennetzwerk Stromkreise für einzelne Signalleitungen oder Verbraucher, die abhängig von der jeweiligen Verdrahtung mit verschiedenen Gleichstromimpulsfolgen beaufschlagt werden.

Bei der in der Offenlegungsschrift beschriebenen Lösung sind ein aus Impulsgeber und Zählkette zusammengesetzter Baustein sowie drei Gruppen von Steuerausgängen vorgesehen, wobei die Steuerausgänge zweier Gruppen entsprechend den jeweils zu erzeugenden Impulsfolgen über Kontakte von Funktionsrelais auf die jeweils zugehörige Impulsleitung einwirken. Während eine der beiden Gruppen den Fortschalteimpuls des Impulsgebers von Ausgang zu Ausgang versetzt liefert, kennzeichnet die andere die Stellung der Zählkette, d.h. die jeweils eingeschaltete Kettenstufe. Indem die von der Zählkette gelieferten Impulse über Kontakte von Funktionsrelais auf den Eingang des Impulsgebers rückgekoppelt werden, wird die Fortschaltung des Impulsgebers und damit der Zählkette festgelegt. Über weitere Funktionsrelaiskontakte kann der an einem der Steuerausgänge anliegende Taktimpuls auf eine Impulsleitung gelangen und mit weiteren derartig erzeugbaren Impulsen zu der gewünschten Impulsfolge kombiniert werden.

Falls der Impulsgeber stehenbleibt, wird die entsprechende Kettenstufe weiterhin eingeschaltet gehalten, und damit das Weiterschalten der Kette durch das Wirksamwerden vorgegebener Funktionsrelais steuerbar. Die einzelnen Impulsfolgen sind so zwar durch von den Funktionsrelais ausgewerteten Signalen in ihrem zeitlichen Ablauf beeinflußbar, im Prinzip aber wenig veränderbar.

Derartige Anordnungen erfordern bekanntlich einen hohen Aufwand von Zählstufen. Gemäß der DE-A-2 546 672 kann man diesen Aufwand an Zählstufen verringern, wenn man die Zeitabschnitte einer Impulsfolge, nämlich Impuls oder Pause, einzeln nacheinander von einem einzigen Zeitglied erzeugt, so daß die vom Zeitglied aufzubringende Laufzeit allein von der Dauer des längsten benötigten Zeitabschnitts der Impulsfolge abhängt. Das Zeitglied wird am Ende jedes Zeitabschnitts in die Ausgangslage geschaltet. Es kann als binär codierte Kettenschaltung ausgeführt sein, wobei für die Festlegung der einzelnen Zeiten zusätzliche Verknüpfungen erforderlich sind.

Es ist Aufgabe der Erfindung, ein Verfahren und eine Schaltungsanordnung zu schaffen, das bzw. die unter Benutzung nur weniger Zählstufen möglichst flexibel ist und auf externe Steuersignale genügend schnell reagiert, um eine Vielzahl von Signalleitungen mit den jeweils benötigten Impulsfolgen zu versorgen.

Diese Aufgabe wird hinsichtlich des Verfahrens durch die Merkmale des Patentanspruchs 1 gelöst.

Demnach erfolgt die Zählweise für die Zähleinrichtung im Binärcode und die jeweils an den Steuerausgängen der Zähleinrichtung auftretende Signalkombination bildet zusammen mit zusätzlichen Bedingungssignalen eine Gesamtkombination, die als solche bewertet wird. Ist eine derartige Gesamtkombination vorgegeben, so kann jeweils eine der vom Impulsgeber abgeleiteten Taktimpulse zur Bildung der jeweils gewünschten Impulsfolge auf die jeweils angeschlossene Signalleitung einwirken. Ebenso kann bei einer vorgegebenen Gesamtkombination der Zählerstand der Zähleinrichtung in der Art zusätzlich beeinflußt werden, daß ein den Ausgangspunkt der weiteren Zählfolge bildender Zählerstand erzeugt und in die Zähleinrichtung geladen wird, so daß ein Fortschalten der Zähleinrichtung vorübergehend unterbunden wird oder aber Zählerstände übersprungen werden.

Neben der direkten Einwirkung der Taktimpulse auf die Signalleitungen können die einzelnen Impulsfolgen auch von den einzelnen Signalleitungen vorgeschalteten bistabilen Kippstufen erzeugt werden, die abhängig von nacheinander auftretenden Gesamtkombinationen durch die damit jeweils verbundenen Taktimpulse gesetzt oder rückgesetzt werden.

Für den Fall, daß Signalkombination der Zähleinrichtung und/oder Gruppen von Bedingungssignalen in mehreren Gesamtkombinationen enthalten sind, werden die Signalkombinationen und/oder Gruppen von Bedingungssignalen zweckmäßig getrennt voneinander und die dabei gewonnenen Ergebnissignale im Rahmen der Gesamtkombination ausgewertet.

Eine Weiterbildung der erfindungsgemäßen Verfahrens bezieht sich auf die Verwendung der erzeugbaren Impulsfolgen zu Steuerzwecken in Datenverarbeitungseinrichtungen und auf die Ableitung der zusammen mit den Signalkombinationen die Gesamtkombinationen bildenden Bedingungssignale.

Die Schaltungsanordnung zur Erzeugung von Impulsfolgen benutzt gemäß Patentanspruch 6 einen Impulsgeber für Taktimpulse mit vorgegebener Impulsfolgezeit, eine von den Taktimpulsen schrittweise fortschaltbare binäre Zähleinrichtung mit einer den Quotienten aus längster zu erzeugender Impulsfolge und Impulsfolgezeit der Taktimpulse übersteigenden Zählkapazität und mit einem Zählerstand jeweils kennzeichnenden Steuerausgängen, sowie zwei Schalternetzwerke. Das erste der beiden Schalternetzwerke ist aus UND-Gattern und nachgeschalteten ODER-Gattern für jede mit einer Impulsfolge zu versorgende Signalleitung aufgebaut und hat die Aufgabe, eine aus einer an den Steuerausgängen der Zähleinrichtung auftretenden Signalkombination in Verbindung mit zusätzlichen Bedingungssignalen gebildete Gesamtkombination auszuwerten. Das zweite Schalternetzwerk besteht ebenfalls aus UND-Gattern und nachgeschalteten ODER-Gattern und dient zur Erzeugung jeweils eines Folgezählerstandes für die Zähleinrichtung in Verbindung mit einem entsprechenden Ladesignal. Dabei wird die binäre Zähleinrichtung ebenfalls bei Vorliegen einer vorgegebenen, aus der an den Steuerausgängen auftretenden Signalkombination in Verbindung mit Bedingungssignalen gebildeten Gesamtkombination mit dem Folgezählerstand geladen, der eine vorübergehende Unterbrechung der Fortschaltung der binären Zähleinrichtung oder ein Überspringen von Zählerständen veranlaßt.

Den Signalleitungen können auch bistabile Kippstufen vorgeschaltet sein, die über individuelle Teile des ersten Schalternetzwerks setz- und rücksetzbar sind. Außerdem besteht die Möglichkeit, beide Schalternetzwerke zweigeteilt auszubilden, wobei das jeweils erste Teilnetzwerk die Signalkombinationen der Zähleinrichtung und/oder Gruppen von Bedingungssignalen auswertet und die dabei gewonnenen Ergebnissignale zur Auswertung der jeweiligen Gesamtkombination an das jeweils zweite Teilnetzwerk liefert.

Einzelheiten der Erfindung werden anhand eines in der Zeichnung dargestellten Ausführungsbeispiels näher erläutert. Im einzelnen zeigen
- FIG 1: das Blockschaltbild einer erfindungsgemäßen Anordnung zur Bildung von Impulsfolgen,
- FIG 2 - FIG 4: drei verschiedene Ausführungsformen für die Bildung der Impulsfolgen,
- FIG 5: ein Ausführungsbeispiel für ein Schalternetzwerk zur Erzeugung einer veränderlichen Impulsfolge als Steuersignal abhängig von zwei unterschiedlichen Steuerbefehlen und
- FIG 6: die Darstellung der jeweiligen Zählerstandsfolge und des zugehörigen Steuersignals für beide Steuerbefehle entsprechend dem Ausführungsbeispiel von Figur 5.

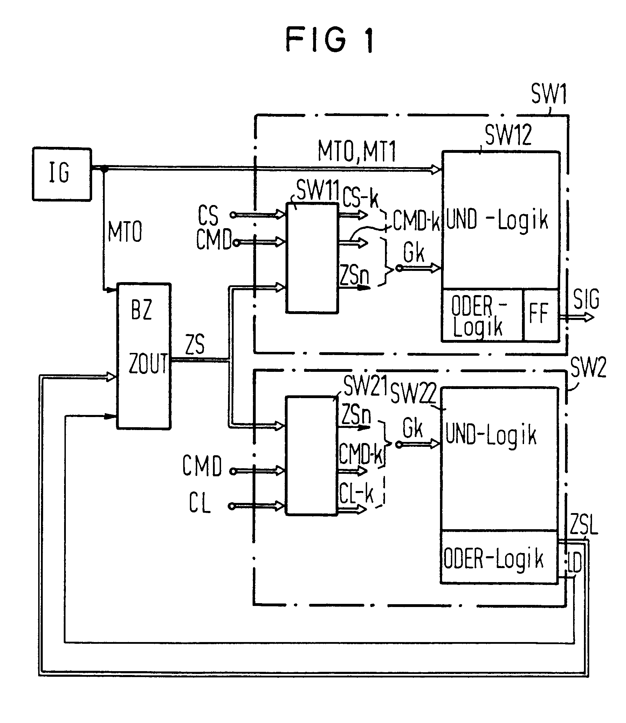

Aus dem Blockschaltbild in FIG 1 ist ersichtlich, daß die Schaltungsanordnung für die Erzeugung von Impulsfolgen für die angeschlossenen Signalleitungen SIG einen Impulsgeber IG, eine binär codierte Zähleinrichtung BZ und die beiden Schalternetzwerke SW1, SW2 aufweist. Der Impulsgeber IG liefert zwei gegeneinander phasenverschobene Taktimpulsfolgen mit den Taktimpulsen MT0 bzw. MT1, wobei die Taktimpulse MT0 für die Fortschaltung der Zähleinrichtung BZ vorgesehen sind, während die Taktimpulse MT1 allein oder in Kombination mit den Taktimpulsen MT0 auf die jeweils angeschlossenen Signalleitungen SIG oder die bistabilen Kippstufen FF, die Bestandteil des Schalternetzwerks SW1 sind, einwirken.

Jeweils an den Steuerausgängen ZOUT der Zähleinrichtung BZ liegt eine Signalkombination ZS an, die zusammen mit zusätzlichen Bedingungssignalen CMD bzw. CS jeweils eine für die Bildung der Impulsfolgen auszuwertende Gesamtkombination GK bildet.

Im Teilnetzwerk SW11 des Schalternetzwerks SW1 können die in mehreren Gesamtkombinationen GK vorkommenden Gruppen von Bedingungssignalen CMD bzw. CS und/oder Signalkombinationen ZS zu den entsprechenden Ergebnissignalen CMD-K bzw. CS-K und/oder ZSn zusammengefaßt werden, die dann gemeinsam mit den Taktimpulsen MT0, MT1 im zweiten Teilnetzwerk SW12, das aus UND-Gattern und nachgeschalteten ODER-Gattern aufgebaut ist, ausgewertet werden. Dabei sind unter Umständen den mit jeweils einer gewünschten Impulsfolge zu versehenden Signalleitungen SIG bistabile Kippstufen FF vorgeschaltet.

In gleicher Weise bildet die an den Steuerausgängen ZOUT der Zähleinrichtung BZ auftretende Signalkombination ZS mit Bedingungssignalen CMD bzw. CL jeweils eine Gesamtkombination GK, in diesem Fall jedoch zur Erzeugung von Folgezählerständen ZSL für die Zähleinrichtung BZ. Dazu ist in dem aus UND-Gattern und nachgeschalteten ODER-Gattern aufgebauten Teilnetzwerk SW22 des zweiten Schalternetzwerks SW2 ein Ladesignal LD ableitbar, so daß die Zähleinrichtung BZ mit einem Zählerstand ZSL geladen wird, der eine Unterbrechung der Zählerstandsfortschaltung oder aber als Ausgangspunkt der weiteren Zählfolge ein Überspringen von Zählerständen zur Folge hat.

Wie im Teilnetzwerk SW11 werden auch im Teilnetzwerk SW21 des Schalternetzwerks SW2 die in mehreren Gesamtkombinationen GK auftretenden Signalkombinationen ZS und/oder die Gruppen von Bedingungssignalen CMD bzw. CL getrennt voneinander ausgewertet und die dabei resultierenden Ergebnissignale ZSn, CMD-K bzw. CL-K mit dem darauf folgenden Teilnetzwerk SW22 verbunden.

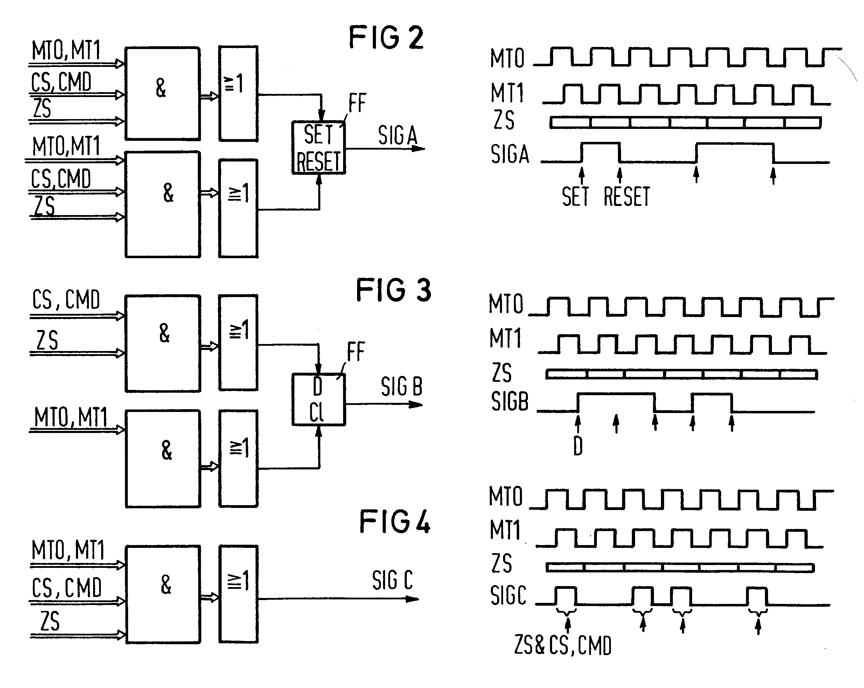

Die Bildung der Impulsfolgen anhand von drei verschiedenen Ausführungsformen zeigen die FIG 2 - 4. Im ersten Beispiel in FIG 2 ist der mit einer Impulsfolge zu versorgenden Signalleitung SIGA eine bistabile Kippstufe FF vorgeschaltet, die über die Zustandsvariablen SET und RESET gesetzt bzw. rückgesetzt wird. Abhängig von den aus Gruppen von Bedingungssignalen CMD bzw. CS und den Zählerständen ZS über UND-/ODER-Gatter gebildeten Kombinationen ist durch die abfallende Flanke des Taktimpulses MT1 eine Zustandsänderung für die Impulsfolge durchführbar. Der Taktimpuls MT1 kann auch kombiniert mit dem dazu phasenverschobenen, die Fortschaltung der Zähleinrichtung veranlassenden Taktimpuls MT0 einen Setz- bzw. Rücksetzvorgang auslösen, wobei die Kombination der Taktimpulse MT0 und MT1 eine Anpassung des Setz- bzw. Rücksetzzeitpunkts abhängig von den gewünschten Impulsfolgen ermöglicht.

Eine weitere in FIG 3 dargestellte Ausführungsform benutzt eine bistabile Kippstufe FF mit einem Dateneingang D, an dem jeweils die Kombination aus den Gruppen von Bedingungssignalen CMD bzw. CS und dem Zählerstand ZS anliegt. Mit der abfallenden Flanke des Taktimpulses MT1 am Takteingang C1 übernimmt die bistabile Kippstufe FF den Zustand am Dateneingang D und speichert ihn bis zur nächsten abfallenden Taktflanke, so daß für die angeschlossene Signalleitung SIGB eine Impulsfolge gemäß FIG 3 erzeugbar ist.

Im Gegensatz zu den beiden beschriebenen Ausführungsformen setzt sich die Impulsfolge für die angeschlossene Signalleitung SIGC gemäß FIG 4 ohne Zwischenschaltung einer bistabilen Kippstufe jeweils aus der Kombination der Gruppen von Bedingungssignalen CMD bzw. CS, des Zählerstandes ZS und der Taktimpulse MT0 bzw. MT1 zusammen, wobei die Taktimpulse MT0 bzw. MT1 direkt die Bildung der gewünschten Impulsfolge beeinflussen.

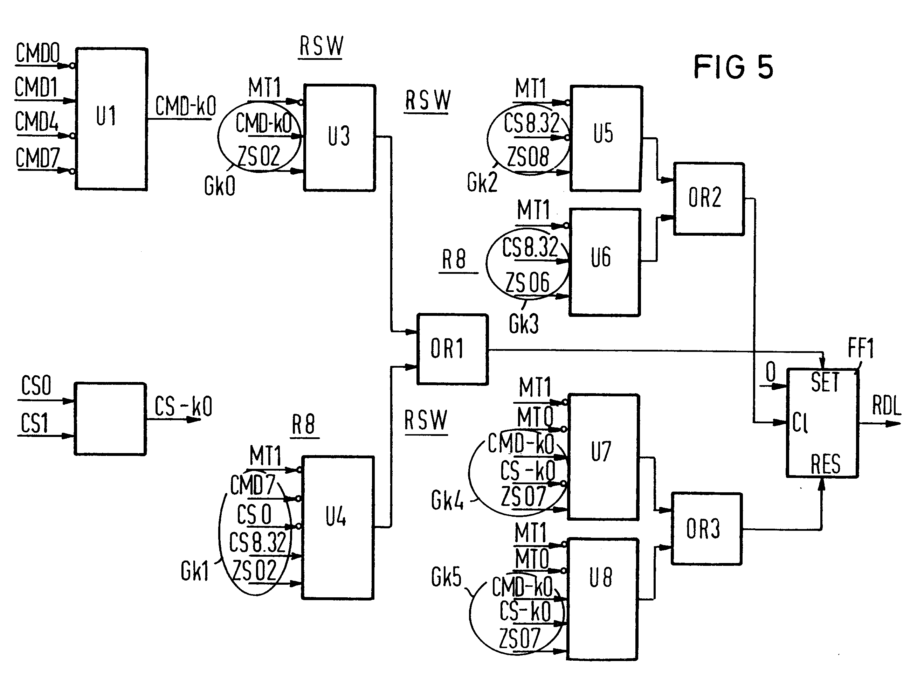

Figur 5 zeigt ein Ausführungsbeispiel für ein aus UND-und ODER-Gattern aufgebautes Schalternetzwerk SW1 aus FIG 1, das die Bildung einer veränderlichen Impulsfolge als Steuersignal abhängig von zwei unterschiedlichen Steuerbefehlen ermöglicht.

Dieses Steuersignal RDL hat die Aufgabe, Lesedaten aus dem Speicher in spezielle Register zu übernehmen. Die im Beispiel verwendeten Bedingungssignale CMD0 ... CMD7 kennzeichnen die jeweils auszuführenden Steuerbefehle, die Bedingungssignale CS0 und CS1 die Speicheradressen der für die Aufnahme der Lesedaten erforderlichen Register und das Bedingungssignal CS8.32 jeden 8 - oder 32 - byte-Lesebefehl.

Während für den Steuerbefehl R8 - Lesen 8 byte - die Bedingungssignale CMD7, CS0 und CS8.32 zusammen mit dem Zählerstand ZS02 die Gesamtkombination GK1 bilden, setzt sich für den Steuerbefehl RSW - Lesen SWAP 64 byte - die Gesamtkombination GK0 aus dem Zählerstand ZS02 und dem Ergebnissignal CMD-K0 zusammen, wobei das Ergebnissignal CMD-K0 aus der Verknüpfung der Bedingungssignale CMD0, CMD1, CMD4 und CMD7 über das UND-Gatter U1 gewonnen wird. Die jeweiligen Ausgänge der UND-Gatter U3 und U4 sind mit den Eingängen eines nachgeschalteten ODER-Gatters OR1 verbunden, dessen Ausgangssignal die bistabile Kippstufe FF1 am Setzeingang SET übernimmt. Das Steuersignal RDL wird für den Steuerbefehl RSW bei Vorliegen der Gesamtkombination GK0 und für den Steuerbefehl R8 bei Vorliegen der Gesamtkombination GK1 jeweils mit der Rückflanke des Taktimpulses MT1 gesetzt. Weist das in der Gesamtkombination GK1 enthaltene Bedingungssignal CS0 den Zustand "0" auf, so wird der Setzvorgang für den Steuerbefehl R8 unterlassen.

Ein Rücksetzen des Steuersignals RDL ist entweder über den Takteingang C1 oder über den Rücksetzeingang RES der bistabilen Kippstufe FF1 möglich. Das mit dem Takteingang verbundene Ausgangssignal des ODER-Gatters OR2 wird abhängig vom jeweiligen Steuerbefehl, R8 oder RSW, entweder von der Gesamtkombination GK3, verknüpft mit dem Taktimpuls MT1 über das UND-Gatter U6, oder über die Gesamtkombination GK2, ebenfalls verknüpft mit dem Taktimpuls MT1 über das UND-Gatter U5, gebildet, so daß für den Steuerbefehl R8 während des Zählerstands ZSO6 bzw. für den Steuerbefehl RSW während des Zählerstands ZSO8 mit der ansteigenden Flanke des Taktimpulses MT1 das Steuersignal RDL rückgesetzt wird.

Der Rücksetzeingang RES der bistabilen Kippstufe FF1 wird mit dem Ausgangssignal des ODER-Gatters OR3 beschaltet, so daß durch die vorgeschalteten UND-Verknüpfungen U7 bzw. U8 bei Vorliegen der Gesamtkombination GK4 bzw. GK5 jeweils in Verbindung mit den miteinander kombinierten Taktimpulsen MT1 und MT0 das Steuersignal RDL während des Zählerstandes ZSO7 rückgesetzt wird, falls die Bedingungssignale CS0 und CS1 beide den Zustand "1" bzw. beide den Zustand "0" annehmen.

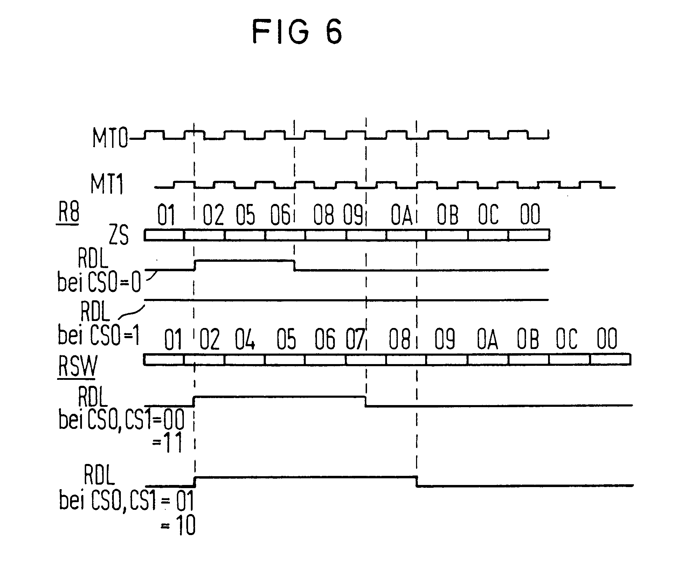

Das Steuersignal RDL ist für beide Steuerbefehle R8 und RSW in Figur 6 entsprechend dem Ausführungsbeispiel von Figur 5 gezeichnet.

Das Schalternetzwerk SW2 gemäß Figur 1 zur Erzeugung von Folgezählerständen für die Zähleinrichtung in Verbindung mit einem Ladesignal ist prinzipiell in gleicher Weise wie das Ausführungsbeispiel in Figur 5 aufgebaut.

## Patentansprüche

1. Verfahren zur Erzeugung von Impulsfolgen für eine Reihe von Signalleitungen mit einer Zähleinrichtung, die den jeweiligen Zählerstand kennzeichnende Steuerausgänge aufweist und durch Taktimpulse eines Impulsgebers schrittweise fortschaltbar ist, wobei die Steuerausgänge entsprechend den jeweils gewünschten Impulsfolgen über Schalter auf die jeweils zugehörige Impulsleitung einwirken und die Zählkapazität der Zähleinrichtung wenigstens dem Quotienten aus der längsten zu erzeugenden Impulsfolge und der Impulsfolgezeit der Taktimpulse entspricht,
**dadurch gekennzeichnet,**
- daß die Zähleinrichtung (BZ) binärcodiert zählt und die jeweils an den Steuerausgängen (ZOUT) der Zähleinrichtung (BZ) auftretende Signalkombination (ZS) zusammen mit zusätzlichen Bedingungssignalen (CMD, CS) eine Gesamtkombination (GK) bildet, die als solche bewertet wird,
- daß jeweils bei Vorliegen einer vorgegebenen Gesamtkombination (GK) einer der vom Impulsgeber (IG) abgeleiteten Taktimpulse (MT0, MT1) zur Bildung der jeweils gewünschten Impulsfolge auf die jeweils angeschlossene Signalleitung (SIG) einwirken kann und
- daß in gleicher Weise bei Vorliegen einer vorgegebenen Gesamtkombination (GK) zwecks zusätzlicher Beeinflussung des Zählerstandes der Zähleinrichtung (BZ) ein den Ausgangspunkt der weiteren Zählfolge bildender Zählerstand (ZSL) erzeugt und in die Zähleinrichtung (BZ) geladen wird, so daß ein Fortschalten der Zähleinrichtung vorübergehend unterbunden wird oder aber Zählerstände übersprungen werden.

2. Verfahren nach Anspruch 1,
**dadurch gekennzeichnet,** daß die einzelnen Impulsfolgen von den einzelnen Signalleitungen (SIG) vorgeschalteten bistabilen Kippstufen (FF) erzeugt werden, die abhängig von nacheinander auftretenden Gesamtkombinationen (GK) durch die damit jeweils verbundenen Taktimpulse (MT0, MT1) gesetzt oder rückgesetzt werden.

3. Verfahren nach Anspruch 1 oder 2,
**dadurch gekennzeichnet,** daß der Impulsgeber (IG) zwei gegeneinander phasenverschobene Taktimpulsfolgen (MT0, MT1) liefert, von denen die eine (MT0) die Zähleinrichtung (BZ) fortschaltet, während die zweite Taktimpulsfolge (MT1) einzeln oder mit der ersten Taktimpulsfolge (MT0) kombiniert auf die jeweils angeschlossenen Signalleitungen (SIG) bzw. die zugehörigen bistabilen Kippstufen (FF) einwirkt.

4. Verfahren nach einem der Ansprüche 1 bis 3,
**dadurch gekennzeichnet,** daß bei in mehreren Gesamtkombinationen (GK) enthaltenen Signalkombinationen (ZS) der Zähleinrichtung (BZ) und/oder Gruppen von Bedingungssignalen (CMD, CS) die Signalkombination und/oder Gruppe von Bedingungssignalen getrennt voneinander ausgewertet wird und dann die dabei gewonnenen Ergebnissignale (CMD-K, CS-K, ZSn) im Rahmen der Gesamtkombination ausgewertet werden.

5. Verfahren nach einem der Ansprüche 1 bis 4,
**dadurch gekennzeichnet,** daß bei Verwendung der erzeugbaren Impulsfolgen zu Steuerzwecken in Datenverarbeitungseinrichtungen die jeweils auszuführenden Zählerstandsfolgen von den jeweils auszuführenden Steuerbefehlen (z.B. R8 oder RSW) für die Datenverarbeitungseinrichtung abhängig sind, die einen Teil der Bedingungssignale liefern, während der andere Teil der Bedingungssignale durch beim Betrieb der Datenverarbeitungseinrichtung auftretende Reaktionen ausgelöst wird.

6. Schaltungsanordnung zur Erzeugung von Impulsfolgen für eine Reihe von Signalleitungen (SIG) mit
- einer durch Taktimpulse (MT0) schrittweise fortschaltbaren binären Zähleinrichtung (BZ), die eine wenigstens den Quotienten aus der längsten zu erzeugenden Impulsfolge und einer Impulsfolgezeit der Taktimpulse entsprechende Zählkapazität sowie einen Zählerstand jeweils kennzeichnende Steuerausgänge (ZOUT) aufweist,
- einem Impulsgeber (IG) zur Erzeugung der Taktimpulse (MT0,MT1) mit vorgegebener Impulsfolgezeit, von denen bei Vorliegen einer vorgegebenen, aus einer an den Steuerausgängen (ZOUT) der binären Zähleinrichtung (BZ) auftretenden Signalkombination (ZS) und zusätzlichen Bedingungssignalen (CMD,CS) gebildeten Gesamtkombination (GK) ein Taktimpuls (MT1) zur Bildung der jeweils gewünschten Impulsfolge auf die jeweils angeschlossene Signalleitung (z.B. SIGA) einwirken kann,
- einem aus UND-Gattern und nachgeschalteten ODER-Gattern für jede mit einer Impulsfolge zu versorgende Signalleitung (z.B. SIGA) aufgebauten ersten Schalternetzwerk (SW1) für eine Auswertung der Gesamtkombination (GK) sowie mit
- einem aus UND-Gattern und nachgeschalteten ODER-Gattern aufgebauten zweiten Schalternetzwerk (SW2) zur Erzeugung eines den Ausgangspunkt der weiteren Zählfolge bildenden Zählerstands (ZSL) und eines Ladesignals (LD) für die binäre Zähleinrichtung (BZ), die bei Vorliegen einer vorgegebenen, aus der Signalkombination (ZS) und Bedingungssignalen (CMD,CL) gebildeten Gesamtkombination (GK) mit dem Folgezählerstand (ZSL) geladen wird, der eine vorübergehende Unterbrechung der Fortschaltung der binären Zähleinrichtung (BZ) oder ein Überspringen von Zählerständen bewirkt.

7. Schaltungsanordnung nach Anspruch 6,
gekennzeichnet durch den Signalleitungen (SIG) vorgeschaltete bistabile Kippstufen (FF), die über individuelle Teile des ersten Schalternetzwerks (SW1) setz- und rücksetzbar sind.

8. Schaltungsanordnung nach Anspruch 6 oder 7,
**dadurch gekennzeichnet,** daß die Schalternetzwerke (SW1) (SW2) zweigeteilt sind, von denen das jeweils erste Teilnetzwerk (SW11) (SW21) die in mehreren Gesamtkombinationen (GK) enthaltenen Signalkombinationen (ZS) der Zähleinrichtung (BZ) und/oder Gruppen von Bedingungssignalen (CMD, CS, CL) auswertet und die gewonnenen Ergebnissignale (CMD-K, CS-K, CL-K, ZSn) zur Auswertung der jeweiligen Gesamtkombination an das jeweils zweite Teilnetzwerk (SW12) (SW22) liefert.

## Claims

1. Method for generating pulse sequences for a number of signal lines, having a counting device which has control outputs characterising the respective counter reading and can be incremented in steps by means of clock pulses from a pulse generator, the control outputs acting via switches in accordance with the respectively desired pulse sequences on the respectively associated pulse line, and the counting capacity of the counting device corresponding at least to the quotient of the longest pulse sequence to be generated and the pulse interval of the clock pulses, characterised in that
- the counting device (BZ) counts in a binary-coded fashion and the signal combination (ZS) occurring respectively at the control outputs (ZOUT) of the counting device (BZ) form, together with additional condition signals (CMD, CS) a total combination (GK) which is evaluated as such,
- in that in each case, given the presence of a prescribed total combination (GK), one of the clock pulses (MT0, MT1) derived from the pulse generator (IG) in order to form the respectively desired pulse sequence can act on the respectively connected signal line (SIG), and in that
- in the same way, given the presence of a prescribed total combination (GK), a counter reading (ZSL) forming the starting point of the further counting sequence is generated for the purpose of additionally influencing the counter reading of the counting device (BZ) and is loaded into the counting device (BZ), so that incrementing the counting device is temporarily suppressed or else counter readings are skipped.

2. Method according to Claim 1, characterised in that the individual pulse sequences are generated by bistable flip flops (FF) which are connected upstream of the individual signal lines (SIG) and are set or reset as a function of sequentially occurring total combinations (GK) by the clock pulses (MT0,MT1) respectively connected thereto.

3. Method according to Claim 1 or 2, characterised in that the pulse generator (IG) delivers two mutually phase-shifted clock pulse sequences (MT0, MT1), of which one (MT0) increments the counting device (BZ) while the second clock pulse sequence (MT1) acts individually or in combination with the first clock pulse sequence (MT0) on the respectively connected signal lines (SIG) or the associated bistable flip flops (FF).

4. Method according to one of Claims 1 to 3, characterised in that, given signal combinations (ZS) of the counting device (BZ) that are contained in a plurality of total combinations (GK) and/or groups of condition signals (CMD, CS), the signal combination and/or group of condition signals are evaluated separately from one another and then the result signals (CMD-K, CS-K, ZSn) obtained in this case are evaluated within the framework of the total combination.

5. Method according to one of Claims 1 to 4, characterised in that, given the use of the generated pulse sequences for control purposes in data processing devices, the counter reading sequences respectively to be carried out depend on the control commands (for example R8 or RSW), respectively to be carried out, for the data processing device, which deliver a portion of the condition signals, while the other portion of the condition signals is triggered by reactions occurring during operation of the data processing device.

6. Circuit arrangement for generating pulse sequences for a number of signal lines (SIG), having
- a binary counting device (B2) which can be incremented in steps by means of clock pulses (MT0) and has a counting capacity corresponding at least to the quotients of the longest pulse sequence to be generated and a pulse interval of the clock pulses, as well as control outputs (ZOUT) respectively characterising a counter reading,
- a pulse generator (IG) for generating the clock pulses (MT0, MT1) with the prescribed pulse interval, of which, given the presence of a prescribed total combination (GK) formed from a signal combination (ZS) occurring at the control outputs (ZOUT) of the binary counting device (BZ) and additional condition signals (CMD, CS), a clock pulse (MT1) for forming the respectively desired pulse sequence can act on the respectively connected signal line (for example, SIGA),
- a first switch network (SW1), constructed from AND gates and OR gates, connected downstream, for each signal line (for example SIGA) to be supplied with a pulse sequence, for evaluation of the total combination (GK), and
- a second switch network (SW2), constructed from AND gates and OR gates, connected downstream, for generating a counter reading (ZSL) forming the starting point of the further counting sequence, and a loading signal (LD) for the binary counting device (BZ) which, given the presence of a prescribed total combination (GK) formed from the signal combination (ZS) and condition signals (CMD, CL) is loaded with the subsequent counter reading (ZSL), which effects a temporary interruption of the incrementing of the binary counting device (BZ) or skipping of counter readings.

7. Circuit arrangement according to Claim 6, characterised by bistable flip flops (FF) which are connected upstream of the signal lines (SIG) and can be set and reset by individual parts of the first switch network (SW1).

8. Circuit arrangement according to Claim 6 or 7, characterised in that the switch networks (SW1) (SW2) are in two parts of which the respectively first partial network (SW11) (SW21) evaluates the signal combinations (ZS) contained in a plurality of total combinations (GK) of the counting device (BZ) and/or groups of condition signals (CMD, CS, CL) and delivers the result signals (CMD-K, CS-K, CL-K, ZSn) obtained to the respectively second partial network (SW12) (SW22) for the purpose of evaluating the respective total combination.

## Revendications

1. Procédé pour produire des suites d'impulsions pour une série de lignes de transmission de signaux, comportant un dispositif de comptage qui possède des sorties de commande caractérisant l'état respectif de comptage et qui peut être avancé pas-à-pas par des impulsions de cadence d'un générateur d'impulsions, les sorties de commande agissant conformément aux suites d'impulsions respectivement désirées, par l'intermédiaire d'interrupteurs, dans la ligne respectivement associée de transmission d'impulsions, et la capacité de comptage du dispositif de comptage correspond au moins au quotient de la suite d'impulsions la plus longue devant être produite et de la durée de la suite des impulsions de cadence, caractérisé par le fait
- que le dispositif de comptage (BZ) exécute un comptage avec codage en binaire, et la combinaison de signaux (ZS), qui apparait respectivement sur les sorties de commande (ZOUT) du dispositif de comptage (BZ), forme une combinaison d'ensemble (GK), qui est également évaluée en tant que telle,
- que respectivement, lors de la présence d'une combinaison totale prédéterminée (GK), l'une des impulsions de cadence (MT0, MT1), dérivées du générateur d'impulsions (IG), peut agir pour la formation de la suite d'impulsions respectivement désirée, dans la ligne de transmission de signaux (SIG) respectivement raccordée, et
- que de la même manière, dans le cas de la présence d'une combinaison totale prédéterminée (GK), en vue d'influencer en supplément l'état de comptage du dispositif de comptage (BZ), un état de comptage (ZLS) formant le point de départ de la suite supplémentaire de comptage, est produite et est chargée dans le dispositif de comptage (BZ) de sorte qu'une avance du dispositif de comptage est empêchée temporairement ou bien des états de comptage sont sautés.

2. Procédé suivant la revendication 1, caractérisé par le fait que les différentes suites d'impulsions sont produites par des étages à bascule bistable (FF) branchés en amont des différentes lignes de transmission de signaux (SIG) et qui, en fonction de combinaisons globales (GK) apparaissant successivement, sont positionnés ou ramenés à l'état initial par les impulsions de cadence (MT0, MT1), qui sont respectivement raccordées à ces étages.

3. Procédé suivant la revendication 1 ou 2, caractérisé par le fait que le générateur d'impulsions (IG) délivre deux suites d'impulsions de cadence réciproquement déphasées (MT0, MT1), dont l'une (MT0) fait avancer le dispositif de comptage (BZ), tandis que la seconde suite d'impulsions de cadence (MT1) agit individuellement ou en combinaison avec la première suite d'impulsions (MT0), sur les lignes de transmission de signaux (SIG) respectivement raccordées ou sur les étages à bascule bistable (FF) associés.

4. Procédé suivant l'une des revendications 1 à 3, caractérisé par le fait que, dans le cas de combinaisons de signaux (ZS), qui comportent plusieurs combinaisons totales (GK), le dispositif de comptage (BZ) et/ou le groupe de signaux de condition (CMD, CS), la combinaison de signaux et/ou le groupe de signaux de condition sont évalués séparément l'un de l'autre et que les signaux de résultat obtenus (CMD-K, CS-K, ZSn) sont évalués dans le cadre de la combinaison totale.

5. Procédé suivant l'une des revendications 1 à 4, caractérisé par le fait que dans le cas de l'utilisation des suites d'impulsions pouvant être produites à des fins de commande dans des dispositifs de traitement de données, les séquences d'état de comptage, qui doivent être respectivement exécutées, dépendent des instructions de commande (par exemple R8 ou RSW) qui doivent être respectivement exécutées, pour le dispositif de traitement de données, instructions qui fournissent une partie des signaux de condition, tandis que l'autre partie des signaux de condition est déclenchée par des réactions qui apparaissent lors du fonctionnement du dispositif de traitement de données.

6. Montage pour produire des suites d'impulsions pour une série de lignes de transmission de signaux (SIG) comportant
- un dispositif de comptage binaire (BZ), qui peut être avancé pas-à-pas sous l'action d'impulsions de cadence (MT0) et qui possède une capacité de comptage qui correspond au moins au quotient de la suite d'impulsions la plus longue devant être produite par une durée de la suite des impulsions de cadence, ainsi que des sorties de commande (ZOUT), qui caractérisent chacune un état de comptage,
- un générateur d'impulsions (IG) servant à produire les impulsions de cadence (MT0, MT1) possédant une durée prédéterminée de succession des impulsions et parmi lesquels, dans le cas de la présence d'une combinaison totale prédéterminée (GK) formée par une combinaison de signaux (ZS), qui apparait sur les sorties de commande (ZOUT) du dispositif de comptage binaire (BSZ), et par des signaux de condition supplémentaires (CMD, CS), une impulsion de cadence (MT1) servant à former la suite respectivement désirée d'impulsions peut agir sur la ligne de transmission de signaux respectivement raccordée (par exemple SIGA),
- un premier réseau d'interrupteurs (SW1) constitué par des portes ET et par des portes OU branchées en aval pour chaque ligne de transmission de signaux (par exemple SIGA) devant être alimentée par une suite d'impulsions, pour une évaluation de la combinaison totale (GK), ainsi que
- un second réseau d'interrupteurs (SW2) constitué par des portes ET et des portes OU branchées en aval pour produire un état de comptage (ZSL) qui constitue le point de départ de l'autre suite de comptage, et un signal de charge (LD) pour le dispositif de comptage binaire (BZ), qui, dans le cas de la présence d'une combinaison totale prédéterminée (GK), formée par la combinaison de signaux (ZS) et par des signaux de condition (CMD, CL), est chargé par l'état (ZLS) du compteur de suite, qui réalise une interruption transitoire de l'avance du dispositif de comptage binaire (BZ) ou un saut d'états de comptage.

7. Montage suivant la revendication 6, caractérisé par des étages à bascules bistables (FF), qui sont branchés en amont des lignes de transmission de signaux (SIG) et peuvent être positionnés et ramenés à l'état initial par l'intermédiaire de parties individuelles du premier réseau d'interrupteurs (SW1).

8. Montage suivant la revendication 6 ou 7, caractérisé par le fait que les réseaux d'interrupteurs (SW1) (SW2) sont divisés en deux, le premier réseau partiel respectif (SW11) (SW21) évaluant les combinaisons de signaux (ZS), qui sont contenus dans plusieurs combinaisons totales (GK), du dispositif de comptage (BZ) et/ou des groupes de signaux de condition (CMD, CS, CL) et envoie les signaux de résultat obtenu (CMD-K, CS-K, CL-K, ZSn) pour évaluer la combinaison totale respective au second réseau partiel respectif (SW12) (SW22).
